(19) Europäisches Patentamt
European Patent Office
Office européen des brevets

(11) Publication number: 0 213 178 B1

(12) **EUROPEAN PATENT SPECIFICATION**

(45) Date of publication of patent specification: **11.04.90**

(51) Int. Cl.⁵: **C 08 G 65/38,** C 08 G 65/40, C 08 G 75/23

(21) Application number: **86901609.7**

(22) Date of filing: **12.02.86**

(86) International application number: **PCT/US86/00292**

(87) International publication number: **WO 86/04905 28.08.86 Gazette 86/19**

# (54) POLYARYL ETHER SULPHONE POLYMERS.

(30) Priority: **13.02.85 US 701306**

(43) Date of publication of application: **11.03.87 Bulletin 87/11**

(45) Publication of the grant of the patent: **11.04.90 Bulletin 90/15**

(84) Designated Contracting States: **AT BE CH DE FR GB IT LI LU NL SE**

(56) References cited: **none**

(73) Proprietor: **AMOCO CORPORATION**
**200 East Randolph Drive P.O. Box 5910-A**
**Chicago Illinois 60680 (US)**

(72) Inventor: **HARRIS, James, Elmer**
**211 Birchview Drive**
**Piscataway, NJ 08854 (US)**
Inventor: **MARESCA, Louis Michael**
**No. 6 Jamie Way**
**Pittsfield, MA 01201 (US)**
Inventor: **MATZNER, Markus**
**23 Marshall Drive**
**Edison, NJ 08817 (US)**

(74) Representative: **Laredo, Jack Joseph et al**
**Elkington and Fife Beacon House 113 Kingsway**
**London, WC2B 6PP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 213 178 B1

**Description**

Technical Field

This invention is directed to novel polyaryl ether sulphone polymers containing the following repeating units:

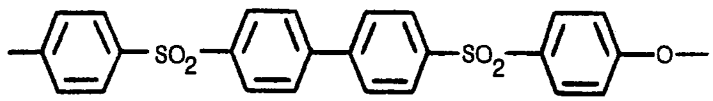 (I)

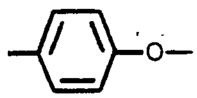 , and (II)

(III) one or more of the following

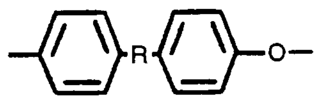

wherein R is $SO_2$, SO, O, CO or a direct bond.

Background of the Invention

A select class of polyaryl ether sulphones containing a unit derived from 4,4-bis(p-halophenylsulfonyl)-biphenyl are described in the art. U.S. Patent No. 3,647,751 depicts polymers of the following formula:

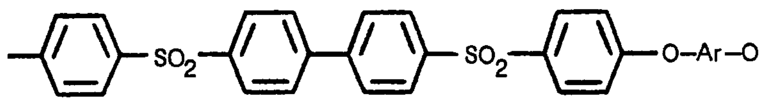

wherein Ar is defined as a diphenylene or naphthylene radical or a polynuclear divalent radical of the formula:

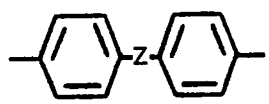

where Z is a divalent aliphatic, cycloaliphatic or araliphatic radical containing 1—8 carbon atoms or —O—, —S—, —SO—, —$SO_2$— or —CO—. Example 3 of U.S. 3,647,751 the only example of a polymer derived from a 4,4-bis(p-halobenzenesulfonyl)biphenyl, depicts the following structure:

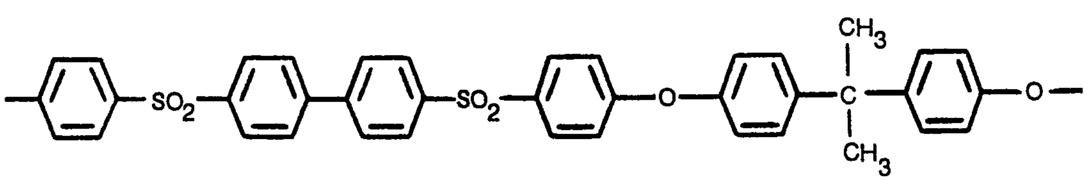

U.S. Patent No. 3,634,355 describes a number of polymers prepared from 4,4'-bis(4-chlorophenyl-sulphonyl)biphenyl. In Example 5 the following polymer is provided:

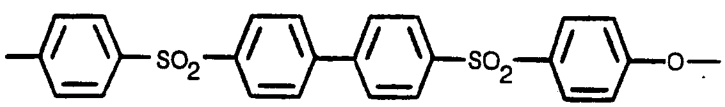 (I)

in example 16 the following polymer is depicted:

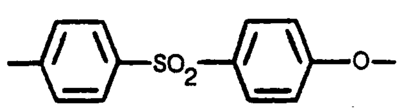 (80 mole percent) and (I)

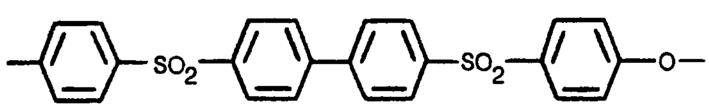 and (20 mole percent) (II)

in example 17 the same structure is shown except that both units (I) and (II) are present in amounts of 50 mole percent.

U.S. Patent No. 4,009,149 describes, as the sole polymer therein, an aromatic polysulphone consisting of repeating units having the formula:

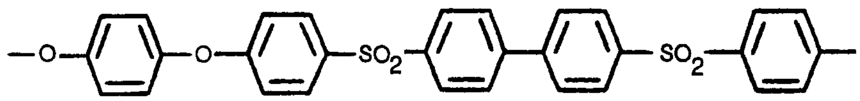

The polymer is described as amorphous and having a glass transition temperature (Tg) of about 260°C. However, applicants haved prepared this polymer (See Control B in Table I) and found it to be slightly crystalline and not amorphous.

British Patent Specification 1,295,584, in Table 1, describes a polymer produced from hydroquinone and 4,4'-bis(4-chlorophenylsulphonyl) diphenyl. This polymer is structurally the same as the polymer of U.S. 4,009,149 depicted above. However, the polymer is described in the British Specification as crystalline in that it has a crystalline melting point of 350°C. Also described in Table 1 of the British Specification are polymers prepared from dithiohydroquinone and 4,4'-bis(4-chlorophenylsulphonyl)diphenyl and from monothiohydroquinone and 4,4'-bis(4-chlorophenylsulphonyl)diphenyl. The latter polymer is described as amorphous. Example 4 of the British Specification describes the preparation of a polymer from monothiohydroquinone, 4,4'-dichlorodiphenylsulphone and 4,4'-bis(4-chlorophenylsulphonyl)biphenyl.

U.S. Patent No. 4,008,203 broadly discloses a host of polysulphones. However, this patent does not specifically disclose or describe polymers derived from 4,4-bis(halophenylsulphonyl)biphenyl but the repeat unit defined broadly therein might be construed by some as having a unit as would be derived from 4,4-bis(halophenylsulphonyl) biphenyl.

The polymers of the prior art produced from hydroquinone and 4,4'-bis(4-chlorophenylsulphonyl)-diphenyl as decribed in U.S. 4,009,149 and British Patent Specification 1,295,584 are deficient in that they do not readily dissolve in common solvents such as N-methylpyrrolidinone and therefore cannot be cast into film. The polymers produced from 4,4'-bis(4-chlorophenylsulphonyl)diphenyl and biphenol as described in U.S. 3,647,751 are crystalline polymers having a Tg of 270°C. They do not readily dissolve in common solvents such as N-methylpyrrolidinone and are difficult to cast into film or spin into hollow fibers.

Further, the polymers of this invention have a reduced susceptability to crystallize from solution which allows improvements in their manufacturing and recovery procedure. It is conventional in polyarylether sulphone synthesis to remove the salt by-product by filtration of the reaction mixture prior to coagulation or desolubilization. Removal of the salt improves electrical properties, increases transparency and improves melt stability. Attempts to filter a sulfolane reaction solution of the copolymer from hydroquinone and 4,4'-bis(4-chlorophenylsulphonyl)biphenyl were unsuccessful due to crystallization of the polymer to temperatures when by-product salt solubility is minimized. The polymer product from 4,4'-bis(4-chlorophenylsulphonyl)biphenyl, hydroquinone and biphenol (100:30:70) does not crystallize from a room temperature sulfolane solution, optionally containing chlorobenzene. When filtered and recovered by coagulation, the polymer was obtained in near quantitative yields with a polymer salt content of <50 parts per million (ppm). Without filtration, salt concentration >500 ppm are routinely observed.

FR—A—2134505 discloses the preparation of a polymer from hydroquinone (50 mole percent) 4,4'-bis(4-chlorophenylsulphonyl)biphenyl (25 mol percent) and 4,4'-dichlorodiphenylsulphone (25 mole percent).

The reactants disclosed in FR—A—2134505 include various dihalobenzoid compounds which are to be used in combination with equimolar amounts of bisphenols. The preferred dihalobenzoid reactants are stated to be the above mentioned 4,4'-dichlorophenylsulphone and 4,4'-bis(4-chlorophenylsulphonyl)-biphenyl, of which the first is the most preferred.

The Invention

The polymer of the present invention contains at least three of the repeating structural units, depicted below. The polymers are amorphous and easily processable. The Tg of the polymers of this invention may be adjusted by varying the units contained therein. Thus, otherwise difficult processable polymers comprised of these structures may be made processable by varying the percentage of the structures. Further, the polymers of this invention are soluble in N-methylpyrrolidinone and thus can be cast into film with this solvent. Most importantly the polymers of this invention have a combination of good mechanical properties.

This invention is directed to polyaryl ether sulphone polymers containing the following repeating units:

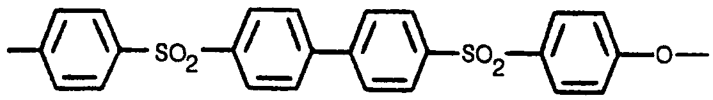

(I)

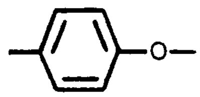

, and

(II)

(III) one or more of the following

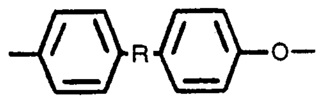

wherein R is $SO_2$, SO, O, CO or direct bond, the polymer containing 40 to 60 mole percent of unit (I).

A preferred polymer contains the following repeating units:

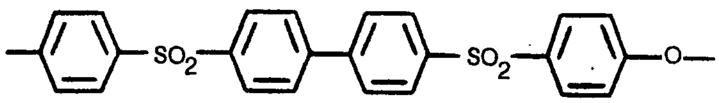

(IV)

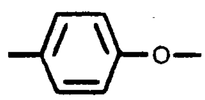

, and

(V)

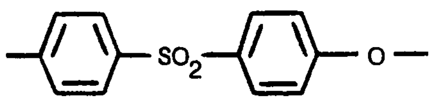

(VI)

Another preferred polymer contains the following repeating units:

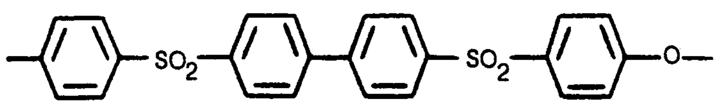

(VII)

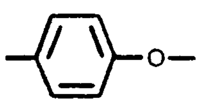

, and

(VIII)

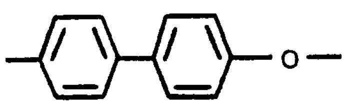

(IX)

Another preferred polymer contains the following repeating units:

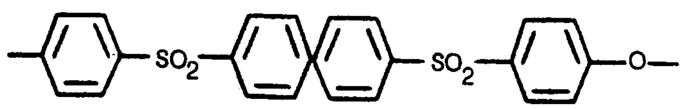

(X)

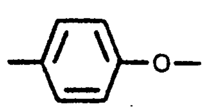

, and

(XI)

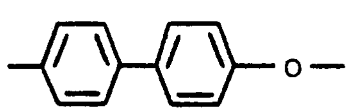

(XII)

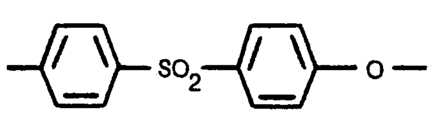

(XIII)

According to a preferred aspect of the invention, the unit (I) is a block of repeating units.

Of course it is apparent that the terminal oxygen atom depicted in the above units may be on either end of the unit and each unit is interconnected through only ether oxygen.

The polymer typically contains from 40 to 60, preferably 50 mole percent of the unit (I) derived from 4,4-bis(p-halophenylsulfonyl)bisphenyl; preferably from 5 to 45, most preferably from 20 to 30 mole percent of the unit (II) derived from hydroquinone, and preferably from 5 to 45, most preferably from 5 to 30 mole percent of the other unit or units (III); the total always equaling 100 mole percent. At least three units being present in the polymer.

The polymers of this invention may be produced by any of the methods described in the patents discussed above in which a bisphenol (ordialkali metal salt thereof) is caused to react with a dihalobenzenoid compound; the bisphenols having the formula:

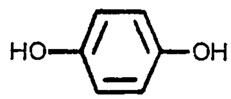 and (XIV)

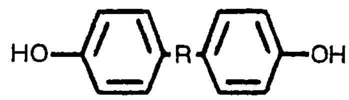 (XV)

wherein R is as defined above; or their alkali metal salts and the dihalobenzenoid compound having the formula:

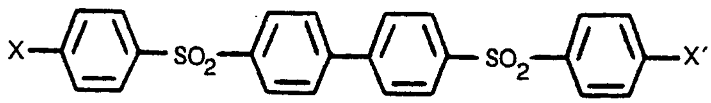 (XVI)

or optionally,

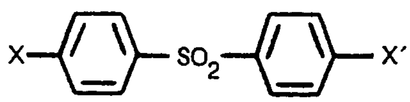 (XVII)

wherein X and X′ are halogen atoms, preferably the same and preferably chlorine or fluorine.

In another embodiment the polymers of the present invention can also be prepared by using the bisphenol obtained by hydrolysis of structure (XVI):

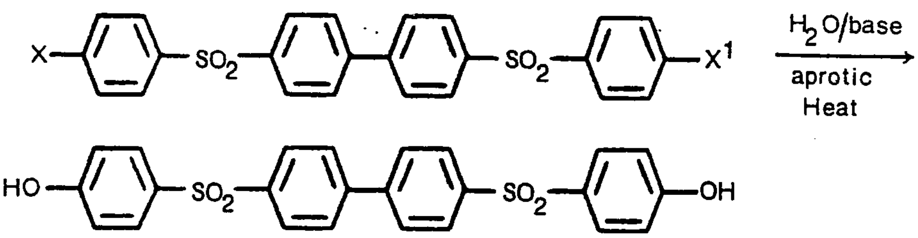

(XVIII)

Condensation of (XVIII) with hydroquinone and 4,4′-dichlorodiphenyl sulfone will lead to one of the preferred structures, i.e., the one containing the units (IV), (V), and (VI). Polymers containing repeat units (VII), (VIII), and (IX) can be obtained via the reaction of (XVI), (XVIII), hydroquinone, and 4,4′-biphenol. Similarly, the copolymer from (X), (XI), (XII), and (XIII) can also be made utilizing (XVIII).

Still another embodiment of the invention makes use of the partial hydrolysis product of (XVI), i.e., (XIX).

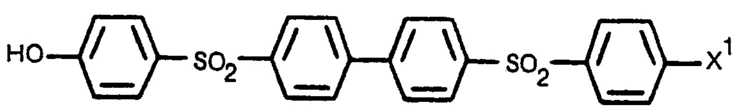 (X) (XIX)

to give rise to the units

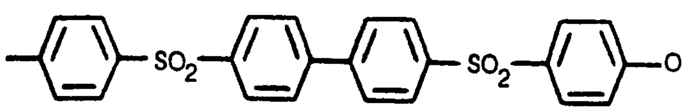

Another embodiment as a component of the polymers of this invention which leads to interesting materials having a block structure comprises hydrolyzing (XVI) to oligomer intermediates such as, e.g.

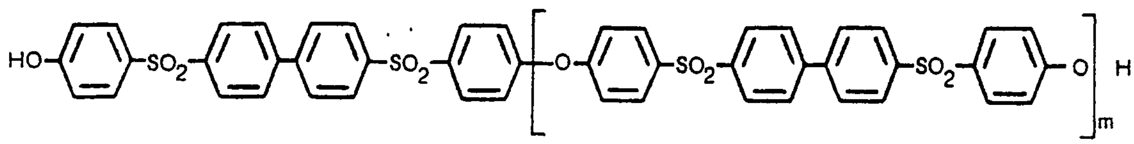

or

(XX)

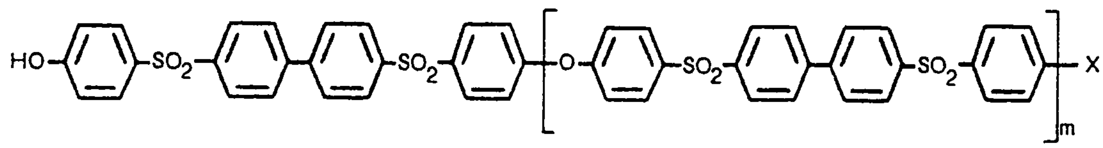

$(X^1)$

(XXI)

or

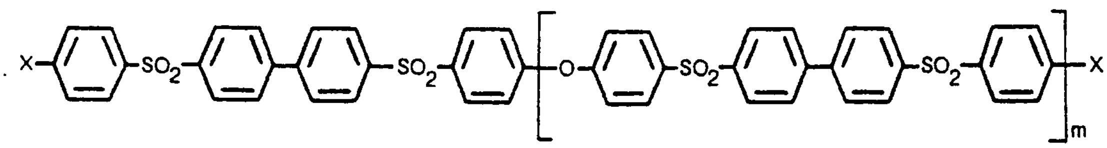

$(X^1)$

(XXII)

wherein m is an integer of from 1 to 100. Oligomers (XX) — (XXII) can be condensed as described above to yield polymers that contain blocks of the units

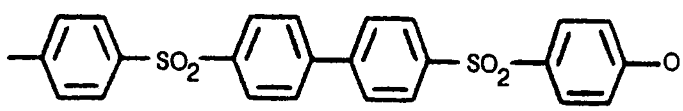

In the polymers of this invention the various combinations and permutations that are possible are quite numerous. They are obvious to those skilled in the art.

The polymers of this invention have a reduced viscosity of from about 0.2 to about 1.0, preferably from about 0.4 to about 0.7 dl/g as measured in N-methylpyrrolidone at 25°C (0.2 grams/100 ml). The polymers are substantially non-crystalline and have a Tg of from about 230 to about 290, preferably from about 250 to about 270°C.

The polymers of this invention are preferably prepared by contacting substantially equimolar amounts of the hydroxy containing compounds (depicted in formulas (XIV) and (XV) and halo containing compounds [depicted in formula (XVI)] with from about 0.5 to about 1.0 mole of an alkali metal carbonate per mole of hydroxyl group, in a solvent mixture comprising a solvent which forms an azeotrope with water in order to maintain the reaction medium at substantially anhydrous conditions during the polymerization and a polar aprotic solvent.

The temperature of the reaction mixture is kept at from about 120 to about 180°C, for about 1 to about 5 hours and then raised and kept at from about 200 to about 250°C, preferably from 210 to about 230°C, for about 1 to 10 hours.

The reaction is carried out in an inert atmosphere, e.g., nitrogen, at atmospheric pressure, although higher or lower pressures may also be used.

The polyarylether sulfone is then recovered by conventional techniques such as coagulation, solvent evaporation, and the like.

The solvent mixture comprises a solvent which forms an azeotrope with water and a polar aprotic solvent. The solvent which forms an azeotrope with water includes an aromatic hydrocarbon such as benzene, toluene, xylene, ethylbenzene, chlorobenzene, and the like.

The polar aprotic solvents employed are those generally known in the art for the manufacture of polyarylether sulfones and include sulfur containing solvents such as those of the formula:

$$R_5{-}S(O)_b{-}R_5$$

in which each $R_5$ represents a monovalent lower hydrocarbon group free of aliphatic unsaturation, which preferably contains less than about 8 carbon atoms or when connected together represents a divalent alkylene group with b being an integer from 1 to 2 inclusive. Thus, in all of these solvents all oxygens and two carbon atoms are bonded to the sulfur atom. Contemplated for use in his invention are such solvents as those having the formula:

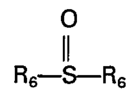 and 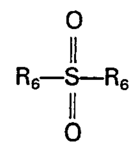

where the $R_6$ groups are independently lower alkyl, such as methyl, ethyl, propyl, butyl, and like groups, and aryl groups such as phenyl and alkylphenyl groups such as the tolyl group, as well as those where the $R_6$ groups are interconnected as in a divalent alkylene bridge such as it exists

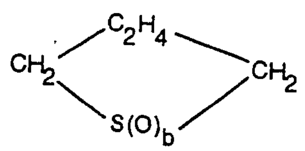

in tetrahydrothiophene oxides and dioxides. Specifically, these solvents include dimethylsulfoxide, dimethylsulfone, diphenylsulfone, diethylsulfoxide, diethylsulfone, diisopropylsulfone, tetrahydrothiophene-1,1-dioxide (commonly called tetramethylene sulfone or sulfolane) and tetrahydrothiophene-1 monoxide.

Additionally, nitrogen containing aprotic solvents may be used. These include dimethylacetamide, dimethylformamide and N-methylpyrrolidone.

The azetrope forming solvent and polar aprotic solvent are used in a weight ratio of from about 1:10 to about 1:1 preferably from about 1:5 to about 1:3.

During the reaction, the hydroxy containing compound is slowly converted, in situ, to the alkali salt thereof by reacting with the alkali metal carbonate or bicarbonate. The alkali metal carbonate or bicarbonate is preferably potassium carbonate or bicarbonate. Mixtures of carbonates such as potassium and sodium carbonate or bicarbonate may also be used.

Water is continuously removed from the reaction mass as an azeotrope with the azeotrope forming solvent so that substantially anhydrous conditions are maintained during the polymerization.

The reaction medium should be maintained substantially anhydrous during the polycondensation in order to secure high molecular weight polymers. It is preferred that the system should preferably contain less than 0.5 percent by weight water throughout the reaction.

The polymers of this invention may include mineral fillers such as carbonates including chalk, calcite, and dolomite; silicates including mica, talc, woolastonite; silicon dioxide; glass spheres; glass powders; aluminum; clay; quartz; and the like. Also, reinforcing fibers such as fiberglass, carbon fibers, and the like may be used. The polymers may also include additives such as titanium dioxide; thermal stabilizers, ultraviolet light stabilizers, plasticizers, and the like.

The polymers of this invention may be fabricated into any desired shape, i.e., moldings, coatings, films, or fibers.

## Examples

The following examples serve to give specific illustrations of the practice of this invention but they are not intended in any way to limit the scope of this invention.

Examples 3—7 are according to the invention. Example 2 and Controls A—C are presented by way of comparison.

### General Polymerization Procedure — Example 1

The polymerization setup consisted of a 1-liter 4-necked round bottomed flask equipped with a nitrogen inlet tube, mechanical stirrer and a Claisen adapter. In one neck of the adapter was placed a thermocouple connected to a thermal controller and in the other neck was a Dean Stark trap filter with a condenser. To the flask were added 45.31 g (0.09 g mole) of 4,4'-bis(4-chlorophenyl sulfonyl)biphenyl, 12.48 g (0.067 mole) of biphenol, 5.51 g (0.022 mole) of dihydroxy diphenyl sulfone 0.34 g (0.002 mole) of p-phenylphenol, 14.93 g (0.108 mole) of potassium carbonate, 110 g sulfolane and 110 g chlorobenzene. The mixture was degassed by bubbling nitrogen through for $\frac{1}{2}$ hour, then was heated to 230°C. After most of the chlorobenzene had been distilled off (approximately 90%), an additional funnel was attached to the flask and chlorobenzene was added dropwise at a rate sufficient to maintain a flow reflux. Heating was continued for 4 hours at which point the mixture was quite viscous. It was allowed to cool to 130°C, and 55 g of chlorobenzene was added folowed by 0.25 g of sodium hydroxide in 2 ml of water and methyl chloride was bubbled through the solution of $\frac{1}{2}$ hour. At the end of this period, 90 ml of chlorobenzene was added and the reaction mixture was allowed to cool to room temperature, then was filtered a course porosity sintered glass funnel. The filtration process takes 1 to 4 hours. The polymer solution was coagulated in methanol and the polymer was isolated by filtration. It was restirred in methanol and reground in a blender and filtered again. Finally, it was boiled in 5 weight percent of oxalic acid for 3 hours and dried at 90°C in a vacuum oven. The reduced viscosity, measured at 25°C at a concentration of 0.2 g/dl in N-methyl pyrrolidone was 0.57 dl/g. The same equipment and procedure were used for all of the copolymers.

Examples 2 to 7; Controls A to C

The procedure of Example 1 was exactly repeated for these examples and controls. The moles of 4,4'-bis(4-chlorophenyl-sulfonyl), biphenyl, biphenol, dihydroxy diphenyl sulfone and hydroquinone used in the reaction are shown in Table I.

TABLE I

| | Moles | | | |
|---|---|---|---|---|
| Example | 4,4'-bis (4-Chlorophenyl Sulfonyl)biphenyl | Dihydroxy Diphenyl Sulfone | Biphenol | Hydroquinone |
| 2 | 0.09 | 0.0225 | 0.0675 | — |
| 3 | 0.09 | — | 0.0675 | 0.0225 |
| 4[1] | 0.09 | 0.068 | — | 0.022 |
| 5[1] | 0.09 | — | 0.0225 | 0.0675 |
| 6 | 0.09 | — | 0.045 | 0.045 |
| 7 | 0.09 | — | 0.0045 | 0.0855 |
| Control A[1] | 0.09 | 0.09 | — | — |
| Control B[1] | 0.09 | — | — | 0.09 |
| Control C[1] | 0.09 | — | 0.09 | — |

[1] X-ray diffraction was determined on these polymers after coagulation in methanol. Control C was shown to be substantially crystalline. Control B was slightly crystalline. Control A and Examples 4 and 5 were amorphous.

Examples 2, 3, 5, 6, 8 and 9; Controls A to C

The procedure of Example 1 was exactly repeated to make the polymers of the examples and controls. Table II shows the mole percent of hydroquinone, dihydroxy diphenyl sulfone, and biphenol used to make the polymer. Also, the polymers of Examples 2, 3, 5, 6, 8, 9, and 10 and Controls A to C were molded into a 4 × 4 × 0.020 inch (101.6 × 101.6 × 0.51 mm) plaque in a cavity mold at 380°C. The molding was done in a South Bend hydraulic press with heated platens. After pressing the plaque, the mold was cooled over a period of about 5 minutes to room temperature by passing water through the platens. The molded plaque was shear cut into $\frac{1}{8}$ inch (3.175 mm) wide strips. These stips were tested for 1% secant modulus according to a procedure similar to ASTM D—638, tensile strength and elongation at break according to ASTM D—638, and pendulum impact strength [(pendulum impact strength is measured as follows: A steel pendulum is used, cylindrical in shape with a diameter of 0.83 inch (21.1 mm) and weighing 1.562 pounds (0.71 kg); the striking piece, mounted almost at the top of the pendulum is a cylinder 0.3 inch (7.62 mm) in diameter; film specimens, 4 inches (101.6 mm) long, 0.125 inch (3.175 mm) wide and about 1 to 30 mils (25.4 to 762 µm) thick are clamped between the jaws of the tester so that the jaws are spaced 1 inch (25.4 mm) apart; the 0.125 inch (3.175 mm) width of the film is mounted vertically; the pendulum is raised to a constant height to deliver 1.13 foot pounds (0.156 kgm) at the specimen; when the pendulum is released the cylindrical striking piece hits the specimen with its flat end, breaks the film, and travels to a measured height beyond; the difference in the recovery height (i.e., the difference in the potential energy of the pendulum at the maximum point of the upswing) represents the energy absorbed by the specimen during the rupture; the strength, expressed in foot-pounds per cubic inch, (in J/mm$^3$) is obtained by dividing the pendulum energy loss by the volume of the specimen]. The melt flow of the polymer was measured according to ASTM D—635. Also, the glass transition temperature of the polymers was measured by the method described by Olabisi, et. al. in Polymer-Polymer Miscibility, Academic Press, New York (1979), pp 126—127. The results are shown in Table II.

TABLE II

| Composition | Control B | 3 | 9 | 6 | 5 | 8 | 9 | 2 | Control C | Control A |
|---|---|---|---|---|---|---|---|---|---|---|
| Hydroquinone | 100 | 25 | — | 50 | 75 | 25 | 60 | — | — | — |
| Biphenol | — | 75 | 75 | 50 | 25 | — | — | 75 | 100 | — |
| Dihyroxy diphenyl sulphone | — | — | 25 | — | — | 75 | 40 | 25 | — | 100 |
| Tensile Strength (psi) (kPa) | 13,600 (93,772) | 12,300 (84,809) | 11,000 (75,845) | 12,700 (87,567) | 12,100 (83,430) | 12,700 (87,567) | 12,400 (185,498) | 11,600 (79,982) | 10,800 (74,466) | 13,300 (91,704) |
| Yield Elongation (%) | None | None | 9.8 | 10 | 10.3 | None | 10 | 8 | None | None |
| Elongation at break (%) | 10 | 11 | 9.5 | 13 | 11 | 9.8 | 10.5 | 9 | 8.5 | 9.0 |
| 1% Secant Modulus (psi) | 282 | 246 | 211 | 259 | 246 | 253 | 211 | 246 | 248 | 275 |
| (kPa) | (1,944) | (1,696) | (1,455) | (1,786) | (1,696) | (1,744) | (1,455) | (1,696) | (1,710) | (1,896) |
| Pendulum Impact Strength (ft. lbs/in³) (mJ/mm³) | 98 (8.1) | 90 (7.4) | 1112 (9.2) | 108 (8.9) | 78 (6.5) | 89 (7.4) | 86 (7.1) | 132 (10.9) | 105 (8.7) | 105 (8.7) |
| Melt Flow (dl/g) 380°C $MF_{10}$ | 2.7 | 2.1 | 2.5 | 1.2 | 14(10P) | 3.4 | 1.17 | 1.1 | 0.76 | 4.2 |
| $MF_3O/MF_{10}$ | 0.7 | 1.0 | 0.9 | 0.4 | 0.7 | 0.46 | 0.8 | 1.0 | 0.95 | 0.83 |
| Tg (°C) | 204 | 250 | 265 | 255 | 255 | 260 | 260 | 265 | 265 | 265 |

Examples 2, 5, 6, 8, 9 and 10 and Controls B and C

The procedure of Example 1 was exactly repeated to make the polymers of the examples and controls. Table III shows the mole percent of hydroquinone, dihydroxy diphenyl sulfone and biphenol used to make the polymer.

Also, test specimens ($\frac{1}{8}$ inch (3.175 mm) wide and 25 mils (635 μm) thick cast from a compression molded sample) were placed under the stress shown in Table II. A cotton swab saturated with the chemical environment, as identified in Table III, was attached to the centre of the test specimen. The time for the specimen to rupture was then recorded. The results are shown in Table III. As can be seen, a 50:50 biphenol/hydroquinone terpolymer (Example 6) and a 75:25 biphenol/dihydroxy diphenyl sulfone terpolymer (Example 2) have much improved environmental stress crack resistance to acetone, as compared with the diphenyl-hydroquinone copolymer (Control B) or the diphenyl-biphenol copolymer (Control C). Solubility problems are also encountered with the latter as appears from Table III.

TABLE III

| Example | 2 | 6 | 10 | 5 | Control B | 9 | 8 | Control C |
|---|---|---|---|---|---|---|---|---|
| composition | | | | | | | | |
| Biphenol | 75 | 50 | 50 | 25 | — | — | — | 100 |
| Hydroquinone | — | 50 | — | 75 | 100 | 60 | 25 | — |
| Dihydroxydiphenyl sulfone | 25 | | 50 | — | — | 40 | 75 | — |
| ESCR in Acetone 1000 psi (6895 kPa) | 22 hr NCNB | 3.4 hr NCNB | 30 sec R | 30 sec R | 30 sec R | 9 sec R | 30 sec R | 0.26 hr R |
| RV*(dl/g) | 0.42 | 0.48 | 0.47 | 0.48 | Did not dissolve | 0.43 | 0.55 | 0.51** |
| Melt Flow (380°C) (dg/min) | 1.1[a] | 9.8[b] | 00,78[a] | 14[b] | 1.1[a] | 1.2[a] | 7.6[b] | 0.76[a] |

R = Rupture
NCNB – Not crazed, not brittle

a. @ 44 psi
b. @ 444 psi
* Reduced viscosity determined in 0.2 g/100 ml of N-methyl pyrrolidinone at 25°C.
** Coagulated material could not be dissolved. The R.V. was run on a plaque molded. The R. V. was measured in N-methylpyrrolidinone at 25°CO 2 g/100 ml. The sample had to be heated to 180°C to effect solution.

**Claims**

1. A polyaryl ether sulphone polymer containing the following repeating units:

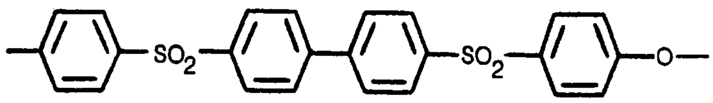 (I)

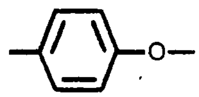 , and (II)

(III) one or more of the following

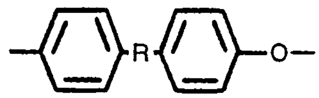

wherein R is $SO_2$ SO, O, CO or a direct bond characterised by from 40 to 60 mole percent of unit (I).

2. A polymer as defined in claim 1 containing the following repeating units:

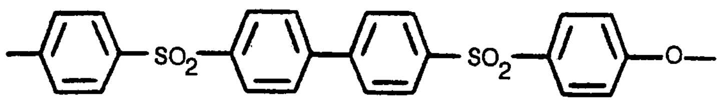 (IV)

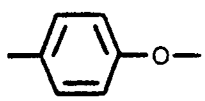 , and (V)

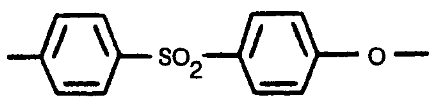 (VI)

3. A polymer as defined in claim 1, containing the following repeating units.

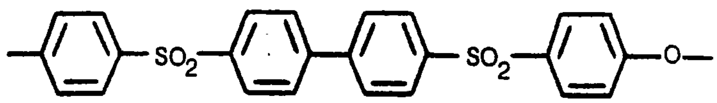 (VII)

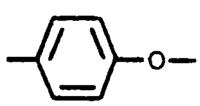 , and (VIII)

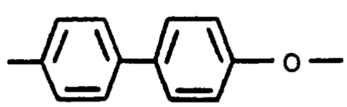 (IX)

4. A polymer as defined in claim 1 containing the following repeating units:

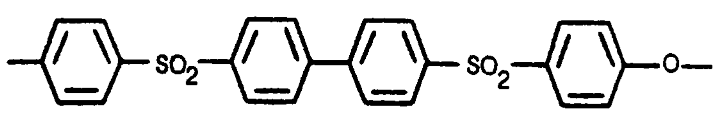 (X)

(XI) 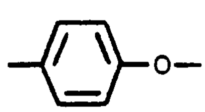 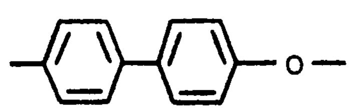 , and (XII)

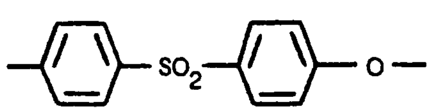 (XIII)

5. The polymer of claim 1 wherein unit (I) is a block of repeating units.

6. A polymer as defined in claim 1 which contains from 5 to 45 mole percent of unit (II).

7. A polymer as defined in claim 1 which contains from 5 to 45 mole percent of unit (III).

**Patentansprüche**

1. Polyarylethersulfonpolymeres, enthaltend die folgenden sich wiederholenden Einheiten:

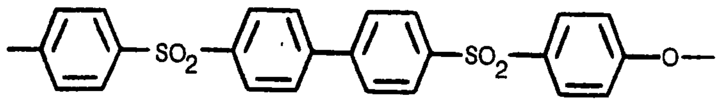
(I)

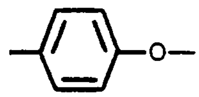
, und (II)

(III) eine oder mehrere der folgenden

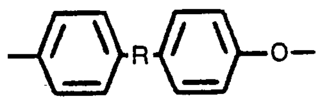

worin R für $SO_2$, SO, O, CO oder eine direkte Bindung steht, gekennzeichnet durch 40 bis 60 Mol-% Einheit (I).

2. Polymers gemäß Anspruch 1, enthaltend die folgenden sich wiederholenden Einheiten:

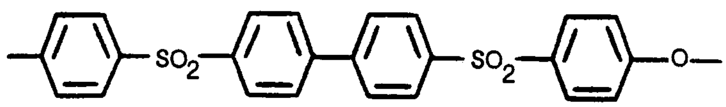
(IV)

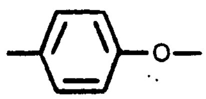
; und (V)

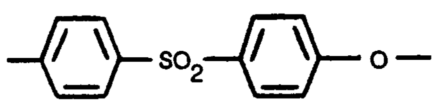
(VI)

3. Polymeres gemäß Anspruch 1, enthaltend die folgenden sich wiederholenden Einheiten:

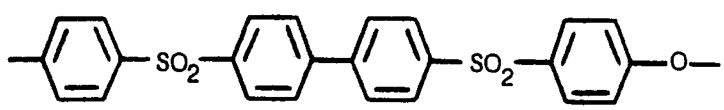
(VII)

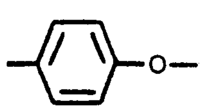
, und (VIII)

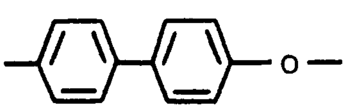
(IX)

4. Polymeres gemäß Anspruch 1, enthaltend die folgenden sich wiederholenden Einheiten:

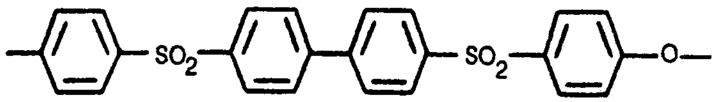

(X)

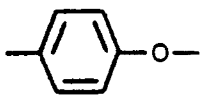

(XI)

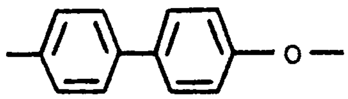 , und

(XII)

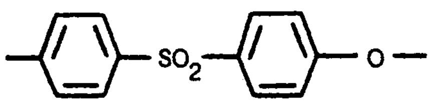

(XIII)

5. Polymeres gemäß Anspruch 1, worin die Einheit (I) ein Block sich wiederholender Einheiten ist.

6. Polymeres gemäß Anspruch 1, das 5 bis 45 Mol-% Einheit (II) enthält.

7. Polymeres gemäß Anspruch 1, das 5 bis 45 Mol-% Einheit (III) enthält.

**Revendications**

1. Polymère d'éther de polyarylsulphone contenant les motifs répétitifs suivants:

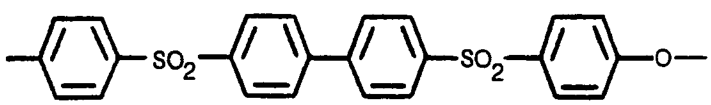

(I)

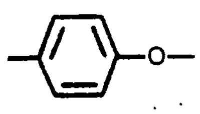 , et

(II)

(III) un ou plus d'un des motifs suivants

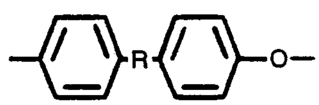

dans lequel R est $SO_2$, SO, O, CO ou une liaison directe, caractérisé en ce qu'il contient de 40 à 60% molaire de motif (1).

2. Polymère selon la revendication 1 contenant les motifs répétitifs suivants:

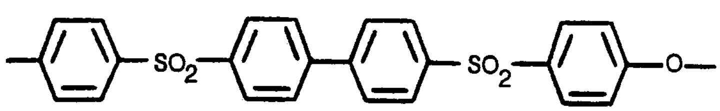

(IV)

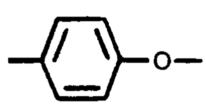 , et

(V)

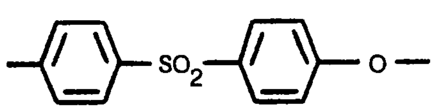

(VI)

3. Polymère selon la revendication 1, contenant les motifs répétitifs suivants:

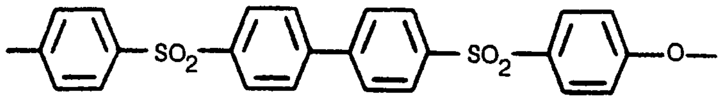

(VII)

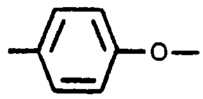

, et

(VIII)

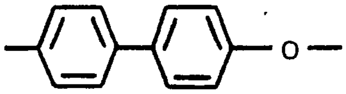

(IX)

4. Polymère selon la revendication 1, contenant les motifs répétitifs suivants:

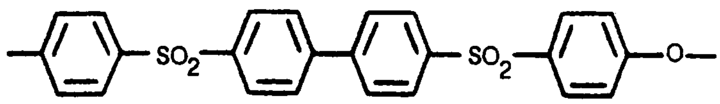

(X)

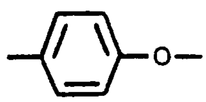

(XI)

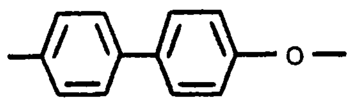

, et

(XII)

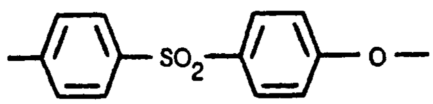

(XIII)

5. Le polymère de la revendication 1, dans lequel le motif (I) est un bloc de motifs répétitifs.
6. Polymère selon la revendication 1 qui contient de 5 à 45% molaire de motif (II).
7. Polymère selon la revendication 1 qui contient de 5 à 45% molaire de motif (III).